# EUROPEAN PATENT APPLICATION

(11) **EP 4 567 928 A1**
(43) Date of publication of application: **11.06.2025**
(21) Application number: 24857447.7
(22) Date of filing: 31.10.2024
(51) Int. Cl.: H01M 4/36, H01M 4/58, H01M 10/058

(54) **LITHIUM IRON PHOSPHATE BATTERY AND HYBRID VEHICLE**

(30) Priority: 20.12.2023 CN 202311765900
(71) Applicant: Eve Power Co., Ltd., Jingmen, Hubei 448000 (CN)
(72) Inventor: QU, Hongjiao, Jingmen, Hubei 448000 (CN); DING, Jing, Jingmen, Hubei 448000 (CN); HU, Qiang, Jingmen, Hubei 448000 (CN); HE, Meng, Jingmen, Hubei 448000 (CN)
(74) Representative: Herrero & Asociados, S.L.
(86) International application number: PCT/CN2024/128769
(87) International publication number: WO 2025/056086

(57) **Abstract**

The present disclosure provides a lithium iron phosphate battery and a hybrid vehicle. The lithium iron phosphate battery includes a first cathode active material, a second cathode active material, a first anode active material, and a second anode active material. A median particle size of the first cathode active material is different from a median particle size of the second cathode active material. A median particle size of the first anode active material is different from a median particle size of the second anode active material. The lithium iron phosphate battery provided in the present disclosure includes both large-particle and small-particle cathode active materials and both large-particle and small-particle anode active materials. Both the cathode and anode use a mixture of large particles and small particles, which solves issues of poor rate performance and polarization when only large particles are used in the cathode active materials and anode active materials, as well as a problem of poor cycle performance caused by excessive side reactions when only small particles are used in the cathode active materials and anode active materials. By combining advantages of taking both large-particle and small-particle cathode active materials and both large-particle and small-particle anode active materials as active materials of lithium iron phosphate battery, rate performance of the lithium iron phosphate battery is improved, while ensuring excellent cycle performance and high energy efficiency of the lithium iron phosphate battery.

## Description

**The** present application claims the priority of Chinese Patent Application No. 2023117659000, filed to the China National Intellectual Property Administration on December 20, 2023, the disclosure of which is hereby incorporated by reference in their entireties into the present application.

### TECHNICAL FIELD

**The** present disclosure relates to the technical field of battery, such as a lithium iron phosphate battery, particularly to a lithium iron phosphate battery and a hybrid vehicle.

### BACKGROUND

Current new energy vehicles face challenges of insufficient refueling infrastructure, low refueling efficiency, and long refueling duration, which are pain points for end customers. To address these issues, the market has introduced hybrid vehicles, which alleviate concerns about range anxiety and refueling anxiety, while also achieving goals of reducing pollution and carbon emission. Hybrid vehicles require high-power and long-life battery cells. While lithium iron phosphate cathode material suffers from poor conductivity, slow lithium-ion diffusion, and issues such as low platform voltage and poor cycle life during high-rate charging and discharging, which cannot meet technical requirements of hybrid heavy-duty trucks.

A Chinese patent application (CN116216679A) discloses a high-pressure compacted lithium iron phosphate, a method for preparing the same, a cathode sheet, and a lithium-ion battery. The method includes: mixing iron phosphate, lithium carbonate, and an organic carbon source, then grinding the mixture of iron phosphate, lithium carbonate, and the organic carbon source in deionized water to a size of 200 nm-500 nm, followed by spray drying, sintering, and finally air jet milling to form large-sized lithium iron phosphate particles with a particle size of 600 nm-1000 nm. The organic carbon source includes at least one selected from the group consisting of sucrose, polybutadiene, polyethylene glycol, etc. The organic carbon source accounts for 6%-9% by weight of the mixture of iron phosphate, lithium carbonate, and the organic carbon source. A second step involves mixing iron phosphate, lithium carbonate, and an inorganic carbon source, grinding the mixture of iron phosphate, lithium carbonate, and the inorganic carbon source in deionized water to a size of 100 nm-300 nm, followed by spray drying, sintering, and finally air jet milling to form small-sized lithium iron phosphate particles with a particle size of 300 nm-500 nm. The inorganic carbon source is carbon black, acetylene black and a mixture of carbon black and acetylene black, and the inorganic carbon source accounts for 4%-6% by weight of the mixture of iron phosphate, lithium carbonate, and the inorganic carbon source. A third step involves mixing the large-sized lithium iron phosphate particles and small-sized lithium iron phosphate particles at a mass ratio of 1:1.5-2.5 to form a lithium iron phosphate cathode material.

**A** Chinese patent application (CN114709486A) discloses a lithium iron phosphate battery and a method for preparing the same, including: obtaining material parameters, where the material parameters include high-capacity, high-compaction density lithium iron phosphate with small particle size and graphite, a high-porosity separator, an electrolyte including a lithium salt with a high concentration, and a combination of conductive agents; determining a ratio of a cathode sheet and a ratio of a anode sheet; obtaining key design parameters of a battery; and, based on the material parameters, the ratio of the cathode sheet and the ratio of the anode sheet, and key design parameters, preparing the lithium iron phosphate battery. This application enables enhancement of battery's high-rate charge and discharge performance without changing energy density, controls temperature rise during high-rate discharge at a lower level, and improves battery's cycle life.

### SUMMARY

### Technical Problem

Currently, the publicly disclosed lithium iron phosphate batteries have certain defects, particularly an inability to simultaneously achieve high power and long cycle life. Therefore, developing a lithium iron phosphate battery with both high power and long cycle life is crucial.

**The** present disclosure provides a lithium iron phosphate battery and a hybrid vehicle. The lithium iron phosphate battery provided in the present disclosure includes both large-particle and small-particle cathode active materials and both large-particle and small-particle anode active materials. Both cathode and anode use a mixture of large particles and small particles, which solves issues of poor rate performance and polarization when only large particles are used in the cathode active materials and anode active materials, as well as a problem of poor cycle performance caused by excessive side reactions when only small particles are used in the cathode active materials and anode active materials. By combining advantages of taking both large-particle and small-particle cathode active materials and both large-particle and small-particle anode active materials as active materials of lithium iron phosphate battery, rate performance of the lithium iron phosphate battery is improved, while ensuring excellent cycle performance and high energy efficiency of the lithium iron phosphate battery.

### Technical Solution

**In** a first aspect, the present disclosure provides a lithium iron phosphate battery. The lithium iron phosphate battery includes a first cathode active material, a second cathode active material, a first anode active material, and a second anode active material. A median particle size of the first cathode active material is different from a median particle size of the second cathode active material. A median particle size of the first anode active material is different from a median particle size of the second anode active material.

**In** a second aspect, the present disclosure provides a hybrid vehicle. The hybrid vehicle includes the lithium iron phosphate battery as described in the first aspect.

### Beneficial Effects

Compared with the related art, the present disclosure has the following beneficial effects.

The lithium iron phosphate battery provided in the present disclosure includes both large-particle and small-particle cathode active materials and both large-particle and small-particle anode active materials. Both the cathode and anode use the mixture of large particles and small particles, which solves the issues of poor rate performance and polarization when only large particles are used in the cathode active materials and anode active materials, as well as the problem of poor cycle performance caused by excessive side reactions when only small particles are used in the cathode active materials and anode active materials. By combining the advantages of taking both large-particle and small-particle cathode active materials and both large-particle and small-particle anode active materials as active materials of lithium iron phosphate battery, the rate performance of the lithium iron phosphate battery is improved, while ensuring excellent cycle performance and high energy efficiency of the lithium iron phosphate battery.

After reading and understanding detailed description, it will be clear how other aspects of the present disclosure work.

### DETAILED DESCRIPTION OF THE PRESENT INVENTION

**In** a first aspect, the present disclosure provides a lithium iron phosphate battery. The lithium iron phosphate battery includes a first cathode active material, a second cathode active material, a first anode active material, and a second anode active material. A median particle size of the first cathode active material is different from a median particle size of the second cathode active material. A median particle size of the first anode active material is different from a median particle size of the second anode active material.

Large particle (with a larger median particle size) cathode active materials and anode active materials have drawbacks of low capacity and high polarization. On the other hand, small particle (with a smaller median particle size) cathode active materials and anode active materials have a larger specific surface area, which leads to excessive side reactions that negatively affect cycle performance.

The lithium iron phosphate battery provided in the present disclosure includes both large-particle and small-particle cathode active materials and both large-particle and small-particle anode active materials. Both the cathode and anode use the mixture of large particles and small particles, which solves the issues of poor rate performance and polarization when only large particles are used in the cathode active materials and anode active materials, as well as the problem of poor cycle performance caused by excessive side reactions when only small particles are used in the cathode active materials and anode active materials. By combining the advantages of taking both large-particle and small-particle cathode active materials and both large-particle and small-particle anode active materials as active materials of lithium iron phosphate battery, the rate performance of the lithium iron phosphate battery is improved, while ensuring excellent cycle performance and high energy efficiency of the lithium iron phosphate battery.

**In** some embodiments, the median particle size of the first cathode active material is greater than the median particle size of the second cathode active material.

In some embodiments, the median particle size of the first cathode active material is in a range of 0.8 µm-1.6 µm. The median particle size of the second cathode active material is in a range of 0.3 µm-1 µm.

In the present disclosure, the median particle size of the first cathode active material is in a range of 0.8µm-1.6 µm, including but not limited to specific examples such as 0.8 µm, 0.9 µm, 1 µm, 1.1 µm, 1.2 µm, 1.3 µm, 1.4 µm, 1.5 µm, or 1.6 µm, and other unlisted values within the numerical range are also applicable.

In the present disclosure, the median particle size of the second cathode active material is 0.3µm-1 µm, including but not limited to specific examples such as 0.3 µm, 0.4 µm, 0.5 µm, 0.6 µm, 0.7 µm, 0.8 µm, 0.9 µm, or 1 µm, and other unlisted values within the numerical range are also applicable.

In some embodiments, a mass ratio of the first cathode active material to the second cathode active material in the lithium iron phosphate battery is (4-7):(3-6), including but not limited to specific examples such as 4:3, 4:4, 4:5, 4:6, 5:3, 5:4, 5:6, 6:3, 6:4, 6:5, 7:3, 7:4, 7:5, or 7:6, and other unlisted values within the numerical range are also applicable.

In some embodiments, the median particle size of the first anode active material is greater than the median particle size of the second anode active material.

In some embodiments, the median particle size of the first anode active material is 10 µm-15 µm. The median particle size of the second anode active material is 5 µm-8 µm.

In the present disclosure, the median particle size of the first anode active material is 10 µm-15 µm, including but not limited to specific examples such as 10 µm, 10.5 µm, 11 µm, 11.5 µm, 12 µm, 12.5 µm, 13 µm, 13.5 µm, 14 µm, 14.5 µm, or 15 µm, and other unlisted values within the numerical range are also applicable.

In the present disclosure, the median particle size of the second anode active material is 5 µm-8 µm, including but not limited to specific examples such as 5 µm, 5.5 µm, 6 µm, 6.5 µm, 7 µm, 7.5 µm, or 8 µm, and other unlisted values within the numerical range are also applicable.

In some embodiments, a mass ratio of the first anode active material to the second anode active material in the lithium iron phosphate battery is (2-6):(4-8), including but not limited to specific examples such as 2:4, 2:5, 2:6, 2:7, 2:8, 3:4, 3:5, 3:7, 3:8, 4:4, 4:5, 4:6, 4:7, 5:4, 5:6, 5:7, 5:8, 6:4, 6:5, or 6:7, and other unlisted values within the numerical range are also applicable.

In some embodiments, the lithium iron phosphate battery includes a cathode sheet, an anode sheet, and a separator.

The cathode sheet includes a cathode current collector and a cathode active substance on a surface of the cathode current collector. The cathode active substance includes the first cathode active material, the second cathode active material, a cathode conductive agent, and a cathode binder.

The anode sheet includes an anode current collector and an anode active substance on a surface of the anode current collector. The anode active substance includes the first anode active material, the second anode active material, an anode conductive agent, and an anode binder.

In some embodiments, a mass ratio of the first cathode active material, cathode conductive agent, and cathode binder is (38.8-67.9):(1.5-2.0):(1.0-1.5), including but not limited to specific examples such as 38.8:2.0:1.0, 67.9:1.5:1.5, 42.3:1.7:1.3, 51.7:1.9:1.4, or 62.8:1.6:1.2, and other unlisted values within the numerical range are also applicable.

In some embodiments, a mass ratio of the first anode active material, anode conductive agent, and anode binder is (19.2-57.6):(0.5-1.0):(3.0-3.5), including but not limited to specific examples such as 19.2:0.5:3.5, 57.6:1.0:3, 22.5:0.6:3.1, 35.7:0.7:3.4, 43.8:0.9:3.1, or 54.8:0.8:3.3, and other unlisted values within the numerical range are also applicable.

In some embodiments, each of the first cathode active material and second cathode active material includes lithium iron phosphate.

In some embodiments, each of the first anode active material and second anode active material includes graphite.

In some embodiments, the cathode conductive agent and anode conductive agent independently include at least one selected from the group consisting of conductive graphite, carbon nanotubes, and carbon fibers. Typically, the cathode conductive agent and anode conductive agent independently include, but are not limited to, a combination of conductive graphite and carbon nanotubes, a combination of carbon nanotubes and carbon fibers, or a combination of conductive graphite, carbon nanotubes, and carbon fibers.

In some embodiments, the cathode binder includes at least one selected from the group consisting of PVDF (Polyvinylidene Fluoride) and PMMA (Polymethyl Methacrylate).

In some embodiments, the anode binder includes at least one selected from the group consisting of CMC (Carboxymethyl Cellulose), SBR (Styrene-Butadiene Rubber), PAA (Polyacrylic Acid), and PTFE (Polytetrafluoroethylene). Typically, the anode binder includes, but is not limited to, a combination of CMC and SBR, a combination of SBR and PAA, a combination of PAA and PTFE, or a combination of CMC, SBR, and PAA.

In some embodiments, the separator includes a polyethylene separator.

In a second aspect, the present disclosure provides a hybrid vehicle. The hybrid vehicle includes the lithium iron phosphate battery as described in the first aspect.

The following provides further explanation of the technical solution of the present disclosure through specific embodiments. Those skilled in the art should understand that the embodiments are only intended to help understand the present disclosure and should not be regarded as specific limitations of the application.

### Example 1

The present embodiment provided a lithium iron phosphate battery. The lithium iron phosphate battery included a cathode sheet, an anode sheet, and a polyethylene separator.

The cathode sheet included a cathode current collector and a cathode active substance on a surface of the cathode current collector. The cathode active substance included a first lithium iron phosphate with a median particle size of 1.15 µm, a second lithium iron phosphate with a median particle size of 0.5 µm, conductive graphite, and PVDF. A mass ratio of the first lithium iron phosphate to the second lithium iron phosphate was 6:4, and a mass ratio of the first lithium iron phosphate, conductive graphite, and PVDF was 42.3:1.7:1.3.

The anode sheet included an anode current collector and an anode active substance on a surface of the anode current collector. The anode active substance included a first graphite with a median particle size of 12 µm, a second graphite with a median particle size of 6 µm, conductive graphite, and CMC. A mass ratio of the first graphite to the second graphite was 5:5, and a mass ratio of the first graphite, conductive graphite, and CMC was 22.5:0.6:3.1.

### Example 2

The present embodiment provided a lithium iron phosphate battery. The lithium iron phosphate battery included a cathode sheet, an anode sheet, and a polyethylene separator.

The cathode sheet included a cathode current collector and a cathode active substance on a surface of the cathode current collector. The cathode active substance included a first lithium iron phosphate with a median particle size of 1.3 µm, a second lithium iron phosphate with a median particle size of 0.45 µm, carbon nanotubes, and PMMA. A mass ratio of the first lithium iron phosphate to the second lithium iron phosphate was 6:4, and a mass ratio of the first lithium iron phosphate, carbon nanotubes, and PMMA was 51.7:1.9:1.4.

The anode sheet included an anode current collector and an anode active substance on a surface of the anode current collector. The anode active substance included a first graphite with a median particle size of 13.5 µm, a second graphite with a median particle size of 5.5 µm, carbon fibers, and SBR. A mass ratio of the first graphite to the second graphite was 5:5, and a mass ratio of the first graphite, carbon fibers, and SBR was 35.7:0.7:3.4.

### Example 3

The present embodiment provided a lithium iron phosphate battery. The lithium iron phosphate battery included a cathode sheet, an anode sheet, and a polyethylene separator.

The cathode sheet included a cathode current collector and a cathode active substance on a surface of the cathode current collector. The cathode active substance included a first lithium iron phosphate with a median particle size of 0.8 µm, a second lithium iron phosphate with a median particle size of 0.3 µm, carbon fibers, and PVDF. A mass ratio of the first lithium iron phosphate to the second lithium iron phosphate was 4:6, and a mass ratio of the first lithium iron phosphate, carbon fibers, and PVDF was 38.8:2.0:1.0.

The anode sheet included an anode current collector and an anode active substance on a surface of the anode current collector. The anode active substance included a first graphite with a median particle size of 10 µm, a second graphite with a median particle size of 5 µm, conductive graphite, and PTFE. A mass ratio of the first graphite to the second graphite was 2:8, and a mass ratio of the first graphite, conductive graphite, and PTFE was 19.2:0.5:3.5.

### Example 4

The present embodiment provided a lithium iron phosphate battery. The lithium iron phosphate battery included a cathode sheet, an anode sheet, and a polyethylene separator.

The cathode sheet included a cathode current collector and a cathode active substance on a surface of the cathode current collector. The cathode active substance included a first lithium iron phosphate with a median particle size of 1.6 µm, a second lithium iron phosphate with a median particle size of 1 µm, carbon nanotubes, and PMMA. A mass ratio of the first lithium iron phosphate to the second lithium iron phosphate was 7:3, and a mass ratio of the first lithium iron phosphate, carbon nanotubes, and PMMA was 67.9:1.5:1.5.

The anode sheet included an anode current collector and an anode active substance on a surface of the anode current collector. The anode active substance included a first graphite with a median particle size of 15 µm, a second graphite with a median particle size of 8 µm, conductive graphite, and PAA. A mass ratio of the first graphite to the second graphite was 6:4, and a mass ratio of the first graphite, conductive graphite, and PAA was 57.6:1.0:3.

### Example 5

The present embodiment provided a lithium iron phosphate battery. Compared to Example 1, the only difference was that the median particle size of the first lithium iron phosphate was 0.6 µm.

### Example 6

The present embodiment provided a lithium iron phosphate battery. Compared to Example 1, the only difference was that the median particle size of the first lithium iron phosphate was 2 µm.

### Example 7

The present embodiment provided a lithium iron phosphate battery. Compared to Example 1, the only difference was that the median particle size of the second lithium iron phosphate was 0.1 µm.

### Example 8

The present embodiment provided a lithium iron phosphate battery. Compared to Example 1, the only difference was that the median particle size of the second lithium iron phosphate was 1.1 µm.

### Example 9

The present embodiment provided a lithium iron phosphate battery. Compared to Example 1, the only difference was that the mass ratio of the first lithium iron phosphate to the second lithium iron phosphate was 2:6.

### Example 10

The present embodiment provided a lithium iron phosphate battery. Compared to Example 1, the only difference was that the mass ratio of the first lithium iron phosphate to the second lithium iron phosphate was 9:3.

### Example 11

The present embodiment provided a lithium iron phosphate battery. Compared to Example 1, the only difference was that the median particle size of the first graphite was 8 µm.

### Example 12

The present embodiment provided a lithium iron phosphate battery. Compared to Example 1, the only difference was that the median particle size of the first graphite was 20 µm.

### Example 13

The present embodiment provided a lithium iron phosphate battery. Compared to Example 1, the only difference was that the median particle size of the second graphite was 3 µm.

### Example 14

The present embodiment provided a lithium iron phosphate battery. Compared to Example 1, the only difference was that the median particle size of the second graphite was 10 µm.

### Example 15

The present embodiment provided a lithium iron phosphate battery. Compared to Example 1, the only difference was that the mass ratio of the first graphite to the second graphite was 1:8.

### Example 16

The present embodiment provided a lithium iron phosphate battery. Compared to Example 1, the only difference was that the mass ratio of the first graphite to the second graphite was 8:4.

### Comparative Example 1

The present comparative example provided a lithium iron phosphate battery. Compared to Example 1, the only difference was that the second lithium iron phosphate with the median particle size of 0.5 µm was replaced with the first lithium iron phosphate with an equal mass and the median particle size of 1.15 µm.

### Comparative Example 2

The present comparative example provided a lithium iron phosphate battery. Compared to Example 1, the only difference was that the second graphite with the median particle size of 6 µm was replaced with the first graphite with an equal mass and the median particle size of 12 µm.

### Comparative Example 3

The present comparative example provided a lithium iron phosphate battery. Compared to Example 1, the only difference was that the second lithium iron phosphate with the median particle size of 0.5 µm was replaced with the first lithium iron phosphate with an equal mass and the median particle size of 1.15 µm, and the second graphite with the median particle size of 6 µm was replaced with the first graphite with an equal mass and the median particle size of 12 µm.

The lithium iron phosphate batteries provided in Examples 1 to 16 and Comparative Examples 1 to 3 were subjected to rate performance tests, cycle performance tests, and energy efficiency tests as follows.

Rate Performance Test Method: A battery cell of each example was charged under a constant current and constant voltage at a specific rate in an environment at 25°C. In detail, a cutoff voltage was set to 3.65V, and a cutoff current was set to 0.05C. A maximum charging current that a lithium iron phosphate battery of each example could withstand without lithium plating was measured, as shown in Table 1.

Cycle Performance Test Method: The battery cell was charged at a constant current and constant voltage with a rate of 1C in the environment at 25°C. In detail, the cutoff voltage was set to 3.65V, and the cutoff current was set to 0.05C, with a 30-minute resting period after charging. The battery cell was then discharged at 1C constant current to a cutoff voltage of 2.5V. The test was conducted for 500 cycles, and a capacity retention rate of the battery cell was measured, as shown in Table 1.

Energy Efficiency Test Method: The battery cell was charged at a constant current and constant voltage with the rate of 1C in the environment at 25°C. In detail, the cutoff voltage was set to 3.65V, and the cutoff current was set to 0.05C, with the 30-minute resting period after charging. The battery cell was then discharged at 1C constant current to the cutoff voltage of 2.5V. The energy efficiency was calculated using the formula: Energy Efficiency=Energy during Discharge/Energy during Charge. The energy efficiency of each lithium iron phosphate battery during charge and discharge at maximum charging current was measured, as shown in Table 1.

**Table 1**

| | maximum charging current (C) | 500-cycle capacity retention rate (%) | energy efficiency (%) |
|---|---|---|---|
| Ex. 1 | 3.80 | 96.0 | 93.5 |
| Ex. 2 | 3.75 | 94.8 | 93.4 |
| Ex. 3 | 3.90 | 92.0 | 95.0 |
| Ex. 4 | 3.70 | 96.5 | 93.2 |
| Ex. 5 | 3.68 | 91.5 | 93.2 |
| Ex. 6 | 3.40 | 91.3 | 90.0 |
| Ex. 7 | 3.75 | 90.8 | 92.7 |
| Ex. 8 | 1.50 | 90.3 | 90.8 |
| Ex. 9 | 3.80 | 90.3 | 92.6 |
| Ex. 10 | 3.30 | 94.7 | 89.5 |
| Ex. 11 | 3.75 | 90.7 | 93.7 |
| Ex. 12 | 3.35 | 91.5 | 89.8 |
| Ex. 13 | 3.75 | 91.2 | 92.6 |
| Ex. 14 | 1.30 | 95.9 | 90.9 |
| Ex. 15 | 3.65 | 94.3 | 93.5 |
| Ex. 16 | 2.40 | 95.9 | 89.6 |
| Comp. Ex. 1 | 2.60 | 92.3 | 88.2 |
| Comp. Ex. 2 | 2.80 | 93.2 | 89.3 |
| Comp. Ex. 3 | 1.50 | 94.5 | 89.0 |

From Table 1, the following conclusions can be drawn.
1. The lithium iron phosphate batteries provided in Examples 1-4 exhibit higher maximum charging current, higher capacity retention rate, and higher energy efficiency.
2. From a comparison between Example 1 and Examples 5 and 6, it can be concluded that the median particle size of the first cathode active material may affect performance of the lithium iron phosphate battery. When the median particle size of the first cathode active material is relatively small, the capacity retention rate of the lithium iron phosphate battery decreases. This is due to an increase in side reactions caused by a smaller particle size of the first cathode active material, which results in worse cycle performance and reduced capacity retention rate. When the median particle size of the first cathode active material is relatively large, the maximum charging current decreases. This is because a large difference between the median particle size of the first cathode active material and a particle size of the second cathode active material leads to increased polarization, resulting in a decline in an overall electrical performance of the battery cell.
3. From a comparison between Example 1 and Examples 7 and 8, it can be concluded that the median particle size of the second cathode active material may affect the performance of the lithium iron phosphate battery. When the median particle size of the second cathode active material is relatively small, there are shortcomings such as extremely large large particles and extremely small small particles of the cathode active materials. This results in poor material uniformity, which leads to large polarization and reduced overall electrical performance of the lithium iron phosphate battery. When the median particle size of the second cathode active material is relatively large, it leads to a decrease in maximum charging current, poorer cycle performance, and lower energy efficiency. This is because a relatively small difference between the median particle size of the second cathode active material and a particle size of the first cathode active material results in both the first cathode active material and second cathode active material being composed mostly of large particles, which fails to address the issue of poor rate performance when only large particles are used for the cathode active materials.
4. From a comparison between Example 1 and Examples 9 and 10, it can be concluded that the mass ratio of the first cathode active material to the second cathode active material may affect the performance of the lithium iron phosphate battery. When the mass ratio of the first cathode active material to the second cathode active material is relatively low, the capacity retention rate and energy efficiency decrease. This is because a proportion of small particles increases. Small particles, due to a smaller size and larger specific surface area, result in a greater contact area with an electrolyte, leading to more side reactions, causing a decline in cycle performance and reduce in capacity retention rate. When the mass ratio of the first cathode active material to the second cathode active material is relatively high, the maximum charging current decreases. This is because the number of large particles increases, and the larger particle size of the active materials in the cathode increases a length of the lithium-ion transport path during charging and discharging, which leads to a decrease in the rate performance.
5. From a comparison between Example 1 and Examples 11 and 12, it can be concluded that the median particle size of the first anode active material may affect the performance of the lithium iron phosphate battery. When the median particle size of the first anode active material is relatively small, the capacity retention rate, energy efficiency, and first cycle efficiency decrease. This is because reduction in the size of large particles in the anode results in a smaller overall particle size and an increased specific surface area of anode active materials. During a first charge, more lithium ions are used to form a SEI film, which reduces reversible active lithium ions, thus lowering the first cycle efficiency and decreasing energy efficiency. When the median particle size of the first anode active material is relatively large, the maximum charging current decreases. This is because an increase in the number of large particles in the anode, similar to the cathode, which causes a decrease in the rate performance.
6. From a comparison between Example 1 and Examples 13 and 14, it can be concluded that the median particle size of the first anode active material may affect the performance of the lithium iron phosphate battery. When the median particle size of the second anode active material is relatively small, the capacity retention rate and energy efficiency decrease. This is because an increase in small particles results in a larger number of active lithium ions on the surface of the anode, which are used to form the SEI film during the first charge and discharge, reducing the amount of reversible lithium ions, thereby lowering first cycle efficiency and energy efficiency. Moreover, due to an increase in side reactions, the cycle performance declines, leading to a reduction in capacity retention rate. When the median particle size of the second anode active material is relatively large, the maximum charging current decreases, cycle performance worsens, and energy efficiency drops. This is because a small difference between the median particle size of the second anode active material and a particle size of the first anode active material results in both the first anode active material and the second anode material being composed mostly of larger particles, thereby failing to address the issue of poor rate performance when only large particles are used for the anode active material, leading to decreased charging and discharging efficiency.
7. From a comparison between Example 1 and Examples 15 and 16, it can be concluded that the mass ratio of the first anode active material to the second anode active material may affect the performance of the lithium iron phosphate battery. When the mass ratio of the first anode active material to the second anode active material is relatively low, the maximum charging current and capacity retention rate decrease, while energy efficiency remains unchanged. This is because the increase in small particles of the anode shortens the lithium-ion transport path during charging and discharging, but large particles are still present, leading to a significant difference between the D99 and D10 particle sizes. As a result, the rate performance does not improve but actually worsens. Additionally, the increase in small particles leads to more side reactions, causing a decrease in capacity retention rate and keeping energy efficiency similar to Example 1. When the mass ratio of the first anode active material to the second anode active material is relatively high, the maximum charging rate significantly decreases, capacity retention rate remains similar to Example 1, and energy efficiency decreases. This is because the large particles become predominant, which increases the lithium-ion transport path during charging and discharging, thus significantly reducing an ability to support a maximum high-rate charging. However, as a proportion of large particles increases, the specific surface area of the material decreases, reducing the contact area with the electrolyte, decreasing side reactions, resulting in capacity retention rate being similar to Example 1. While the increased larger particles also lead to increased polarization, higher temperature rise in the battery cell, and, as a consequence, reduced energy efficiency.
8. From a comparison between Example 1 and Comparative Examples 1-3, it can be concluded that the lithium iron phosphate battery provided in the present disclosure includes both large-particle and small-particle cathode active materials and both large-particle and small-particle anode active materials. Both the cathode and anode use a mixture of large particles and small particles, which solves the issues of poor rate performance and polarization when only large particles are used in the cathode active materials and anode active materials, as well as the problem of poor cycle performance caused by excessive side reactions when only small particles are used in the cathode active materials and anode active materials. By combining the advantages of taking both large-particle and small-particle cathode active materials and both large-particle and small-particle anode active materials as active materials of lithium iron phosphate battery, the rate performance of the lithium iron phosphate battery is improved, while ensuring excellent cycle performance and high energy efficiency of the lithium iron phosphate battery.

## Claims

1. A lithium iron phosphate battery, comprising a first cathode active material, a second cathode active material, a first anode active material, and a second anode active material, wherein a median particle size of the first cathode active material is different from a median particle size of the second cathode active material, and a median particle size of the first anode active material is different from a median particle size of the second anode active material.

2. The lithium iron phosphate battery as claimed in claim 1, wherein the median particle size of the first cathode active material is greater than the median particle size of the second cathode active material.

3. The lithium iron phosphate battery as claimed in claim 1 or 2, wherein the median particle size of the first cathode active material is in a range of 0.8 µm-1.6 µm, and the median particle size of the second cathode active material is in a range of 0.3 µ m-1 µm.

4. The lithium iron phosphate battery as claimed in any one of claims 1-3, wherein a mass ratio of the first cathode active material to the second cathode active material in the lithium iron phosphate battery is (4-7):(3-6).

5. The lithium iron phosphate battery as claimed in any one of claims 1-4, wherein the median particle size of the first anode active material is greater than the median particle size of the second anode active material.

6. The lithium iron phosphate battery as claimed in any one of claims 1-5, wherein the median particle size of the first anode active material is 10 µm-15 µm, and the median particle size of the second anode active material is 5 µm-8 µm.

7. The lithium iron phosphate battery as claimed in any one of claims 1-6, wherein a mass ratio of the first anode active material to the second anode active material in the lithium iron phosphate battery is (2-6):(4-8).

8. The lithium iron phosphate battery as claimed in any one of claims 1-7, comprising a cathode sheet, an anode sheet, and a separator;
wherein the cathode sheet comprises a cathode current collector and a cathode active substance on a surface of the cathode current collector, and the cathode active substance comprises the first cathode active material, the second cathode active material, a cathode conductive agent, and a cathode binder;
the anode sheet comprises an anode current collector and an anode active substance on a surface of the anode current collector, and the anode active substance comprises the first anode active material, the second anode active material, an anode conductive agent, and an anode binder.

9. The lithium iron phosphate battery as claimed in claim 8, wherein a mass ratio of the first cathode active material, cathode conductive agent, and cathode binder is (38.8-67.9):(1.5-2.0):(1.0-1.5).

10. The lithium iron phosphate battery as claimed in claim 8 or 9, wherein a mass ratio of the first anode active material, anode conductive agent, and anode binder is (19.2-57.6):(0.5-1.0):(3.0-3.5).

11. The lithium iron phosphate battery as claimed in any one of claims 1-10, wherein each of the first cathode active material and second cathode active material comprises lithium iron phosphate.

12. The lithium iron phosphate battery as claimed in any one of claims 1-11, wherein each of the first anode active material and second anode active material comprises graphite.

13. The lithium iron phosphate battery as claimed in any one of claims 8-10, wherein the cathode conductive agent and anode conductive agent independently comprise at least one selected from the group consisting of conductive graphite, carbon nanotubes, and carbon fibers.

14. The lithium iron phosphate battery as claimed in any one of claims 8-10 and 13, wherein the cathode binder comprises at least one selected from the group consisting of PVDF and PMMA;
optionally, the anode binder comprises at least one selected from the group consisting of CMC, SBR, PAA, and PTFE;
optionally, the separator comprises a polyethylene separator.

15. A hybrid vehicle, comprising the lithium iron phosphate battery as claimed in any one of claims 1-14.
